(19) Europäisches Patentamt
European Patent Office
Office européen des brevets

(11) EP 1 144 481 B1

(12) # FASCICULE DE BREVET EUROPEEN

(45) Date de publication et mention de la délivrance du brevet:
**18.10.2006 Bulletin 2006/42**

(21) Numéro de dépôt: **99961129.6**

(22) Date de dépôt: **21.12.1999**

(51) Int Cl.:
*C08G 69/18* (2006.01) *C08G 69/28* (2006.01)
*C08G 69/04* (2006.01)

(86) Numéro de dépôt international:
**PCT/FR1999/003233**

(87) Numéro de publication internationale:
**WO 2000/039193 (06.07.2000 Gazette 2000/27)**

(54) **PROCEDE DE FABRICATION DE POLYAMIDES**

VERFAHREN ZUR HERSTELLUNG VON POLYAMIDEN

METHOD FOR MAKING POLYAMIDE

(84) Etats contractants désignés:
**AT BE CH CY DE DK ES FI FR GB GR IE IT LI LU MC NL PT SE**
Etats d'extension désignés:
**LT LV**

(30) Priorité: **23.12.1998 FR 9816588**

(43) Date de publication de la demande:
**17.10.2001 Bulletin 2001/42**

(73) Titulaire: **Rhodianyl**
**92512 Boulogne-Billancourt Cédex (FR)**

(72) Inventeurs:
- **KAYSER, Dominique**
**F-69590 Ste Colombe (FR)**
- **THIERRY, Jean-François**
**F-69340 Francheville (FR)**
- **VARLET, Joel**
**F-69005 Lyon (FR)**

(74) Mandataire: **Esson, Jean-Pierre**
**Rhodia Services,**
**Direction de la Propriété Industrielle,**
**Centre de Recherches de Lyon**
**BP 62**
**85, avenue des Frères Perret**
**69192 Saint-Fons Cédex (FR)**

(56) Documents cités:
**DD-A- 280 766**
**DE-A- 2 554 788**
**FR-A- 2 744 914**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

EP 1 144 481 B1

## Description

L'invention concerne un procédé de fabrication de polyamide. Le procédé est mis en oeuvre en présence d'un catalyseur.

La fabrication de polymères de type polyamide est principalement effectuée par polycondensation à partir de monomères de diacides carboxyliques et de diamines ou à partir de composés de type lactames ou aminoacides. Ces polycondensations peuvent être accélérées par l'emploi d'un catalyseur. De nombreuses études ont été menées sur les catalyseurs actifs et sur leur mode d'introduction.

Parmi les catalyseurs connus, les catalyseurs contenant du phosphore ont fait l'objet de nombreuses études. Le brevet US 39445118 enseigne l'utilisation d'acide phosphorique comme catalyseur de polycondensation pour la fabrication de polyamide 66, celui-ci étant introduit avec de l'hexaméthylène diamine dans le milieu de polymérisation. Le brevet US 4912175 enseigne l'utilisation de catalyseurs phosphoniques par exemple du type de l'acide 2-(2' pyridyl) éthylphosphonique ou du 2-(2' pyridyl) éthylphosphonate de diéthyle.

L'emploi de ces catalyseurs permet d'augmenter les cinétiques de polycondensation des polyamides. Néanmoins les catalyseurs contenant du phosphore voient en général leur effet presque totalement inhibé en présence d'agents matifiants, par exemple de dioxyde de titane enrobé. De tels agents sont en particulier utilisés pour des applications textiles afin de diminuer la translucidité des fibres, par exemple pour la confection d'article de chaussant féminin. Ils sont de manière générale composés de dioxyde de titane à l'échelle micrométrique dans des proportions allant de 0.3% à 2% en poids. Le dioxyde de titane micrométrique est choisi pour sa facilité de mise en oeuvre et sa blancheur. Il est généralement incorporé dans le milieu de polymérisation en début de procédé. Il est avantageusement passivé, par exemple à l'aide d'une couche protectrice, afin de limiter la dégradation photochimique du polymère en sa présence. Les couches protectrices utilisées sont généralement à base de silice et peuvent contenir de l'alumine. La présence des agents matifiants et particulièrement des agents matifiants passivés diminue fortement l'efficacité catalytique des composés utilisés par accélérer les polymérisations.

Le catalyseur selon l'invention est composé de particules solides à base de dioxyde de titane à l'échelle nanométrique. Par nanométrique, on entend que le diamètre moyen des particules ou leur taille moyenne est inférieur à environ 100 nm. Le catalyseur peut être utilisé pour la fabrication de tous types de polyamides ou de copolymères à base de polyamide. Il est par exemple efficace pour la fabrication de polyamides issus de polymérisation des lactames ou des amino acides, comme le caprolactame ou l'acide 6-amino-hexanoïque, ou pour la fabrication des polyamides issus de la copolymérisation entre des monomères de diacides carboxyliques et de diamines Il est en particulier efficace pour la catalyse de la condensation de l'acide adipique et de l'hexaméthylène diamine. Il est adapté à la fabrication de toute composition à base de polyamide et de tout copolymère à base de polyamide.

Selon un mode de réalisation de l'invention, la surface du catalyseur à base de dioxyde de titane est revêtue d'un composé différent du dioxyde de titane, par exemple la silice. Le revêtement à la surface du catalyseur peut ne pas être continu et être présent à la surface des particules par exemple sous forme d'amoncellements. Les concentrations en catalyseur utilisées peuvent dépendre de l'état de surface des particules et de leur mode de préparation. Elles sont avantageusement supérieures à 100 ppm en poids par rapport au poids de monomère.

Les polymérisations à partir de monomères de diacides carboxyliques et de diamines comprennent généralement trois étapes. La première étape est la concentration d'un di-sel carboxylate-ammonium dans l'eau, appelé "sel N". Cette étape est suivie d'une amidification (condensation des fonctions acides et amines) notamment sous pression. La condensation est poursuivie ensuite sous pression atmosphérique jusqu'au degré de polymérisation désiré. Cette dernière étape est appelée finition. Pour ce type de polymérisation le catalyseur peut être introduit dans le sel N, par exemple lors de la phase d'amidification à haute pression.

Les polymérisations à partir des lactames et des aminoacides sont généralement réalisées de la façon suivante: polyaddition des monomères à température comprise entre 200°C et 300°C à partir d'un mélange de monomère et d'eau, granulation du produit obtenu, lavage des granulés à l'eau pour extraction des monomères motifs de faible masse moléculaire, séchage. Le catalyseur peut par exemple être introduit dans le mélange de monomère et d'eau.

Le dioxyde de titane nanoparticulaire peut être introduit dans le réacteur de condensation soit directement sous forme de poudre, soit sous forme de suspension ou de dispersion dans un milieu liquide. Ledit milieu liquide peut être de l'eau ou une composition de polyamide fondu.

Le dioxyde de titane nanoparticulaire catalyse la polymérisation de toutes les compositions à base de polyamides. Son utilisation est particulièrement avantageuse lorsque le produit fabriqué est une composition contenant un agent matifiant. L'inhibition de l'effet catalytique par ledit agent est moins marquée qu'avec un catalyseur à base de phosphore. Cette propriété est en particulier vérifiée en présence d'un agent matifiant à base de dioxyde de titane d'une granulométrie de l'ordre du micromètre. Par exemple le catalyseur objet de l'invention est efficace en présence de dioxyde de titane revêtu ou partiellement d'un composé à base de silice, à l'état de particules de diamètre supérieur à 1 μm.

L'utilisation du catalyseur décrit dans le présent document est particulièrement avantageuse par rapport à l'utilisation d'autres catalyseurs lorsque la teneur en matifiant dans les compositions est supérieure à 0.5% en poids.

D'autres détails ou avantages de l'invention apparaîtront plus clairement au vu des exemples donnés ci-dessous uniquement à titre indicatif.

**Exemple 1**

Une suspension à 20% dans l'eau de particules de dioxyde de titane de diamètre d'environ 50 nm, réalisée selon les deux premières étapes décrites dans l'exemple 1 du brevet publié FR 2744914, est introduite dans un réacteur de condensation de Polyamide 66 pendant la phase d'amidification sous pression, de façon à obtenir dans le réacteur une proportion de catalyseur de 500 ppm en poids par rapport au polymère. La condensation est réalisée à une température de 275°C.
Après 45 minutes de finition, l'indice de viscosité du polymère obtenu est de 145 ml/g.
Un procédé identique réalisé en absence de catalyseur conduit à un indice de viscosité de 135 ml/g après 45 minutes de finition.
Les indices de viscosité (IV) sont mesurés à 25°C à l'aide d'un viscosimètre de type Ubbelohde pour une solution à 5 g/l de polymère dissous dans un mélange composé de 90% en poids d'acide formique et de 10% d'eau.

**Exemple 2**

On définit l'efficacité catalytique d'un catalyseur par la différence des constantes cinétiques d'amidification $k_1$ après finition en présence et en absence de catalyseur rapportée à la constante cinétique $k_1$ en absence de catalyseur.

$$\text{efficacité} = \frac{k_{1\,\text{catalyse}} - k_{1\,\text{sans catalyse}}}{k_{1\,\text{sans catalyse}}}$$

La constante $k_1$ est définie par le système suivant:

$$-COOH + -NH_2 \underset{k_2}{\overset{k_1}{\rightleftharpoons}} -CONH- + H_2O$$

$$-NH-CO-(CH_2)_4-COOH \xrightarrow{k_3} NH_2 + CO_2 + C_5H_8O$$

Les équations cinétiques sont les suivantes:

$$\frac{d[COOH]}{dt} = [-k_1[COOH][NH_2] + k_2[CONH][H_2O]][COOH] - k_3[COOH]$$

$$\frac{d[NH_2]}{dt} = [-k_1[COOH][NH_2] + k_2[CONH][H_2O]][COOH] + k_3[COOH]$$

$$\frac{d[CONH]}{dt} = [k_1[COOH][NH_2] - k_2[CONH][H_2O]][COOH] - k_3[COOH]$$

où [COOH] est la concentration en groupements terminaux acides, $[NH_2]$ est la concentration en groupements terminaux amines, [NHCO] est la concentration en motifs amides, $[H_2O]$ est la concentration en eau.
[COOH] et $[NH_2]$ sont mesurées par dosage potentiométrique, $[H_2O]$ est déterminée à partir de la mesure de la pression

partielle en eau $P_{H2O}$ dans le réacteur de condensation: log ($[H_2O]/P_{H2O}$)= 1800/T - 1.2214,
où T la température en Kelvin, $P_{H2O}$ est la pression partielle en eau en bar et $[H_2O]$ est la concentration en eau en meq/kg. [CONH] est déterminée par un bilan matière.

On prépare selon un procédé usuel un Polyamide 66 sans agent matifiant, en présence soit de catalyseur usuel comprenant du phosphore, soit de catalyseur selon l'invention. On prépare selon le même procédé un polyamide 66 en absence de catalyseur.
On prépare une composition de Polyamide 66 comportant du dioxyde de titane microparticulaire revêtu de silice (matifiant) en proportion de 1.6 % en poids. On mesure l'effet catalytique obtenu à l'aide des mêmes catalyseurs.
Par rapport à l'effet catalytique observé en absence de l'agent matifiant, on observe en présence de l'agent matifiant une réduction de 95% de l'effcacité catalytique d'un acide phosphorique en proportion de 8.4 ppm.
Pour un catalyseur composé de particules de dioxyde de titane de diamètre d'environ 50 nm, en partie revêtu de silice et concentré à 2000 ppm, préparé selon les quatre étapes de l'exemple 1 du brevet publié FR 2744914, on observe une réduction de l'efficacité catalytique de 69%.
Le catalyseur selon la présente invention voit donc son action moins inhibée que celle d'un catalyseur phosphore en présence d'un agent matifiant.

## Exemple 3

On prépare un polyamide 6 en absence et en présence de catalyseur. Le catalyseur utilisé est du dioxyde de titane nanoparticulaire traité avec de la silice, préparé selon les quatre étapes de l'exemple 1 du brevet publié FR 2744914.
Le procédé de polymérisation est le suivant: Un mélange de 70% en poids de caprolactame et de 30% en poids d'eau est concentré par chauffage à 80% en poids de caprolactame. Le mélange concentré est porté à une pression de 17.5 bars et distillé à cette pression. Le produit obtenu est détendu à pression atmosphérique et subit une finition à 270°C.
Le catalyseur est introduit en proportion de 2000 ppm en poids par rapport au polymère dans le mélange initial de caprolactame et d'eau.
En absence de catalyseur, l'indice de viscosité après finition est de 130 ml/g.
En présence du catalyseur, l'indice de viscosité après finition est de 145 ml/g.

## Revendications

1. Procédé de fabrication de polyamides **caractérisé en ce que** la polymérisation est catalysée par des particules solides à base de dioxyde de titane de diamètre inférieur à 100 nm.

2. Procédé selon la revendication 1 **caractérisé en ce que** les particules de dioxyde de titane de diamètre inférieur à 100 nm sont revêtues au moins partiellement d'un autre composé.

3. Procédé selon la revendication 2 **caractérisé en ce que** les particules de dioxyde de titane de diamètre inférieur à 100 nm sont revêtues au moins partiellement d'un composé à base de silice.

4. Procédé selon l'une des revendications 1à 3 **caractérisé en ce que** la concentration de catalyseur est supérieure à 100 ppm par rapport au poids de monomères.

5. Procédé selon l'une des revendications 1 à 4 **caractérisé en ce que** le polyamide contient un agent matifiant.

6. Procédé selon la revendication 5 **caractérisé en ce que** l'agent matifiant contient du dioxyde de titane sous forme de particules de diamètre supérieur à 1 $\mu$m.

7. Procédé selon la revendication 6 **caractérisé en ce que** les particules de dioxyde de titane de diamètre supérieur à 1 $\mu$m sont revêtues au moins partiellement d'un composé à base de silice et/ou d'alumine.

8. Procédé selon, l'une des revendications 5 à 7 **caractérisé en ce que** l'agent matifiant est présent dans le polymère à une teneur supérieure à 0.5 % en poids.

9. Procédé selon l'une des revendications 1 à 8 **caractérisé en ce que** le polyamide est le produit de polymérisation d'un lactame ou d'un aminoacide.

**10.** Procédé selon la revendication 9 **caractérisé en ce que** le lactame est le caprolactame.

**11.** Procédé selon l'une des revendications 1 à 8 **caractérisé en ce que** le polyamide est un produit de condensation de monomères de diacides carboxyliques et de diamines.

**12.** Procédé selon la revendication 11 **caractérisé en ce que** le polyamide est en majorité composé du produit de condensation entre l'acide adipique et l'hexamétylène-diamine.

**13.** Procédé selon l'une des revendications 11 à 12 **caractérisé en ce** le catalyseur est introduit dans le mélange de di-sel carboxylate-ammonium et d'eau.

**14.** Procédé selon la revendication 13 **caractérisé en ce que** le catalyseur est introduit sous forme concentrée dans un milieu liquide.

**15.** Procédé selon la revendication 14 **caractérisé en ce que** le milieu liquide est de l'eau.

**16.** Procédé selon la revendication 14 **caractérisé en ce que** le milieu liquide est une composition de polyamide fondu.

## Claims

**1.** Process for manufacturing polyamides, **characterized in that** the polymerization is catalysed by solid particles based on titanium dioxide with a diameter of less than 100 nm.

**2.** Process according to Claim 1, **characterized in that** the titanium dioxide particles with a diameter of less than 100 nm are at least partially coated with another compound.

**3.** Process according to Claim 2, **characterized in that** the titanium dioxide particles with a diameter of less than 100 nm are at least partially coated with a silica-based compound.

**4.** Process according to one of Claims 1 to 3, **characterized in that** the catalyst concentration is greater than 100 ppm relative to the weight of monomers.

**5.** Process according to one of Claims 1 to 4, **characterized in that** the polyamide contains a matt-effect agent.

**6.** Process according to Claim 5, **characterized in that** the matt-effect agent contains titanium dioxide in the form of particles with a diameter of greater than 1 μm.

**7.** Process according to Claim 6, **characterized in that** the titanium dioxide particles with a diameter of greater than 1 μm are at least partially coated with a compound based on silica and/or alumina.

**8.** Process according to one of Claims 5 to 7, **characterized in that** the matt-effect agent is present in the polymer at a content of greater than 0.5% by weight.

**9.** Process according to one of Claims 1 to 8, **characterized in that** the polyamide is the product of polymerization of a lactam or an amino acid.

**10.** Process according to Claim 9, **characterized in that** the lactam is caprolactam.

**11.** Process according to one of Claims 1 to 8, **characterized in that** the polyamide is a product of condensation of dicarboxylic acid monomers and diamine monomers.

**12.** Process according to Claim 11, **characterized in that** the polyamide is mainly composed of the condensation product between adipic acid and hexamethylenediamine.

**13.** Process according to either of Claims 11 and 12, **characterized in that** the catalyst is introduced into the mixture of carboxylate-ammonium di-salt and water.

14. Process according to Claim 13, **characterized in that** the catalyst is introduced in concentrated form into a liquid medium.

15. Process according to Claim 14, **characterized in that** the liquid medium is water.

16. Process according to Claim 14, **characterized in that** the liquid medium is a molten polyamide composition.

**Patentansprüche**

1. Verfahren zur Herstellung von Polyamiden, **dadurch gekennzeichnet, daß** die Polymerisation durch feste Teilchen auf der Basis von Titandioxid mit einem Durchmesser von unter 100 nm katalysiert wird.

2. Verfahren nach Anspruch 1, **dadurch gekennzeichnet, daß** die Teilchen von Titandioxid mit einem Durchmesser von unter 100 nm mindestens teilweise mit einer anderen Verbindung überzogen sind.

3. Verfahren nach Anspruch 2, **dadurch gekennzeichnet, daß** die Teilchen von Titandioxid mit einem Durchmesser von unter 100 nm mindestens teilweise mit einer Verbindung auf der Basis von Siliciumdioxid überzogen sind.

4. Verfahren nach einem der Ansprüche 1 bis 3, **dadurch gekennzeichnet, daß** die Konzentration des Katalysators über 100 ppm beträgt, bezogen auf das Gewicht der Monomeren.

5. Verfahren nach einem der Ansprüche 1 bis 4, **dadurch gekennzeichnet, daß** das Polyamid ein Mattierungsmittel enthält.

6. Verfahren nach Anspruch 5, **dadurch gekennzeichnet, daß** das Mattierungsmittel Titandioxid in Form von Teilchen mit einem Durchmesser von über 1 $\mu$m enthält.

7. Verfahren nach Anspruch 6, **dadurch gekennzeichnet, daß** die Teilchen von Titandioxid mit einem Durchmesser von über 1 $\mu$m mindestens teilweise mit einer Verbindung auf der Basis von Siliciumdioxid und/oder Aluminiumoxid überzogen sind.

8. Verfahren nach einem der Ansprüche 5 bis 7, **dadurch gekennzeichnet, daß** das Mattierungsmittel in dem Polymer in einem Gehalt von über 0,5 Gew.-% anwesend ist.

9. Verfahren nach einem der Ansprüche 1 bis 8, **dadurch gekennzeichnet, daß** das Polyamid das Produkt der Polymerisation eines Lactams oder einer Aminosäure ist.

10. Verfahren nach Anspruch 9, **dadurch gekennzeichnet, daß** das Lactam Caprolactam ist.

11. Verfahren nach einem der Ansprüche 1 bis 8, **dadurch gekennzeichnet, daß** das Polyamid ein Produkt der Kondensation von Monomeren von Dicarbonsäuren und Diaminen ist.

12. Verfahren nach Anspruch 11, **dadurch gekennzeichnet, daß** das Polyamid eine in der Überzahl vorliegende Verbindung des Produktes der Kondensation zwischen Adipinsäure und Hexamethylendiamin ist.

13. Verfahren nach einem der Ansprüche 11 bis 12, **dadurch gekennzeichnet, daß** der Katalysator in die Mischung von Disalz Carboxylat-Ammonium und Wasser eingetragen wird.

14. Verfahren nach Anspruch 13, **dadurch gekennzeichnet, daß** der Katalysator in konzentrierter Form in ein flüssiges Medium eingetragen wird.

15. Verfahren nach Anspruch 14, **dadurch gekennzeichnet, daß** das flüssige Medium Wasser ist.

16. Verfahren nach Anspruch 14, **dadurch gekennzeichnet, daß** das flüssige Medium eine Zusammensetzung von geschmolzenem Polyamid ist.